# EUROPEAN PATENT APPLICATION

(11) **EP 4 431 889 A1**
(43) Date of publication of application: **18.09.2024**
(21) Application number: 22889605.6
(22) Date of filing: 01.06.2022
(51) Int. Cl.: G01K 11/12, C09J 11/00, C09J 201/00, G01K 11/16

(54) **TEMPERATURE INDICATOR MANUFACTURING SYSTEM AND TEMPERATURE INDICATOR MANUFACTURING METHOD**

(30) Priority: 08.11.2021 JP 2021181744
(71) Applicant: Hitachi Industrial Equipment Systems Co., Ltd., Tokyo 101-0021 (JP)
(72) Inventor: AIDA, Kohhei, Tokyo 101-0021 (JP); MAEJIMA, Tomoko, Tokyo 101-0021 (JP); OGINO, Masahiko, Tokyo 101-0021 (JP)
(74) Representative: MERH-IP Matias Erny Reichl Hoffmann Patentanwälte PartG mbB
(86) International application number: PCT/JP2022/022336
(87) International publication number: WO 2023/079780

(57) **Abstract**

To provide a temperature indicator manufacturing system and a temperature indicator manufacturing method that reduce the labor and cost of management associated with temperature indicator manufacture. The temperature indicator manufacturing system includes: a marking device 12 that marks a base material with a temperature detecting material containing a matrix material and a temperature indicating material including at least a leuco dye, a color developer, and a decolorant; and an adhesive application device 13 that applies an adhesive onto the temperature detecting material provided as marking on the base material, wherein the adhesive is applied in a state where the temperature detecting material provided as the marking on the base material is solidified, and solidified before the temperature detecting material provided as the marking on the base material is liquefied.

## Description

### Technical Field

The present invention relates to a temperature indicator manufacturing system and a temperature indicator manufacturing method.

### Background Art

Fresh foods, frozen foods, vaccines, and cold storage pharmaceuticals such as biopharmaceuticals require a cold chain to unintermittently maintain those at a low temperature during a distribution process including manufacturing, transportation, and consumption. Actually, in order to continuously measure and record temperatures during distribution, generally, a transportation container often has a data logger mounted thereon, wherein the data logger is capable of continuously recording times and temperatures; and if a damage occurs on a product, the data logger can clarify the responsibility therefor.

When the quality of an individual product is controlled, a temperature indicator is used instead of the data logger in a certain method. Although the temperature indicator does not have a high recording accuracy compared with the data logger, it can be attached to an individual product; and when the temperature becomes above or below a preset temperature, a surface of the temperature indicator is colored, allowing a change in the temperature environment to be known.

In particular, in the case of managing the quality of a product such as fresh foods or biopharmaceuticals, which gradually deteriorates depending on the temperature and time, a time-temperature indicator (TTI) that changes color by integrating time and temperature is used.

PTL 1 discloses a temperature detecting material that can be manufactured through a simple process and is excellent in handleability.

PTL 2 discloses a temperature detection label and a temperature detection ink which do not deteriorate a color-developing function and a decoloring function of a temperature detecting material.

### Citation List

### Patent Literature

PTL 1: WO 2018/110200
PTL 2: Japanese Unexamined Patent Application Publication No. 2020-118656

### Summary of Invention

### Technical Problem

A temperature indicator itself is relatively inexpensive; however, it has a property to change its color irreversibly when a temperature becomes above or below a preset temperature; and therefore, even before use of the temperature indicator for product management, for example, storage or transportation of the temperature indicator, the temperature control is needed and simple use thereof is sometimes difficult.

Meanwhile, the degree of irreversibility required for a temperature indicator is varied depending on the product on which it is attached. In the case of an expensive pharmaceutical, there is a need for forgery prevention; and complete irreversibility is required such that once a temperature indicator changes its color by deviation from a preset temperature, it has to maintain the changed color thereafter. However, in the case of the quality control of inexpensive fresh foods or the like, it is enough to maintain the irreversibility during distribution process carried out at environmental temperatures or lower; and it is rather expected that the reduction of labor or cost caused by management of temperature indicators promote use of temperature indicators.

Temperature detecting materials used for a temperature indicator applicable as TTI include a temperature detecting material using, as a temperature indicating material, a material including a leuco dye, a color developer and a decolorant. This temperature detecting material can be manufactured by a simple method; on the other hand, a color change of the temperature indicating material occurs with a change of state of the temperature indicating material and therefore, it is likely to be affected by surrounding materials and has a disadvantage in the handleability. Because of this, PTL 1 protects a temperature indicating material with a matrix material thereby to improve the handleability. However, a matrix material has to give no influence on the coloring property of a temperature indicating material and therefore, it is limited to nonpolar materials. Thus, temperature detecting materials formed of these materials are often less adhesive to various materials, making it difficult to use them such that they are directly adhered to base materials, unlike an ink, a paint, or the like.

PTL 2 discloses a temperature indicator wherein a temperature detecting material including a leuco dye, a color developer, a decolorant and a matrix material is fixed on a base material by an adhesive layer and a protective layer, or an adhesive and protective layer.

For start of the quality control of a target product, the temperature indicator of PTL 2 is heated to a temperature of not lower than the melting point thereby to melt a temperature indicating material and implement initialization of color. Thus, the temperature indicator before initialization can be stored and transported at normal temperature and this can reduce the labor or cost for management of the temperature indicator. However, since an adhesive and a temperature indicating material are both in contact in a liquified state in the initialization process, a material not affecting the coloring property of the temperature indicating material is required for the adhesive. Because of this, PTL 2 restricts a resin material possibly in contact with the temperature indicating material to a material having at least one type of structure of a polysiloxane structure and a polyolefin structure, thereby avoiding an influence of the initialization process on the coloring property of the temperature indicating material.

The present invention has been made based on the above problems and it relates to a temperature indicator manufacturing system and a temperature indicator manufacturing method, which reduces the labor or cost for management of temperature indicator manufacturing.

### Solution to Problem

A temperature indicator manufacturing system as one embodiment of the present invention has: a marking device that marks a base material with a temperature detecting material containing a matrix material and a temperature indicating material including at least a leuco dye, a color developer, and a decolorant; and an adhesive application device that applies an adhesive onto the temperature detecting material provided as marking on the base material, wherein the adhesive is applied in a state where the temperature detecting material provided as the marking on the base material is solidified, and solidified before the temperature detecting material provided as the marking on the base material is liquefied.

Other modes of the present invention will be described in the below-described embodiments.

### Advantageous Effects of Invention

The labor or cost for management of temperature indicator manufacturing can be reduced. Other problems and novel features will be clarified from the description of this specification and the accompanying drawings.

### Brief Description of Drawings

FIG. 1A shows a differential scanning calorimetry measurement curve of a temperature indicating material A.
FIG. 1B shows a differential scanning calorimetry measurement curve of a temperature indicating material B.
FIG. 2A shows a relationship of color density and temperature of a temperature indicating material A.
FIG. 2B shows a relationship of color density and temperature of a temperature indicating material A.
FIG. 3A is a schematic view showing a phase separation structure of a temperature detecting material (decolored state).
FIG. 3B is a schematic view showing a phase separation structure of a temperature detecting material (color-developed state).
FIG. 4A is an optical micrograph of a temperature detecting material (decolored state).
FIG. 4B is an optical micrograph of a temperature detecting material (color-developed state).
FIG. 5 is a schematic view showing a configuration of a temperature indicator.
FIG. 6 is a schematic view showing a configuration of a temperature indicator.
FIG. 7A is a flowchart of manufacturing of a temperature indicator.
FIG. 7B is a view schematically showing a manufacturing process of a temperature indicator in a temperature indicator manufacturing system.
FIG. 8 is a view showing an example of a distribution process in which a target product is under temperature control.
FIG. 9 includes photographs showing elapsed times from the timing when the temperature was deviated, and color densities in Example 1 and Comparative Example 1.
FIG. 10 is a graph showing the time dependency of color densities in Example 1 and Comparative Example 1. Description of Embodiments

Hereafter, aspects for carrying out the present invention (hereinafter, referred to as "embodiment") will be described in detail with reference to drawings as appropriate. Like reference signs designate the same parts throughout the drawings, and duplicated descriptions are omitted.

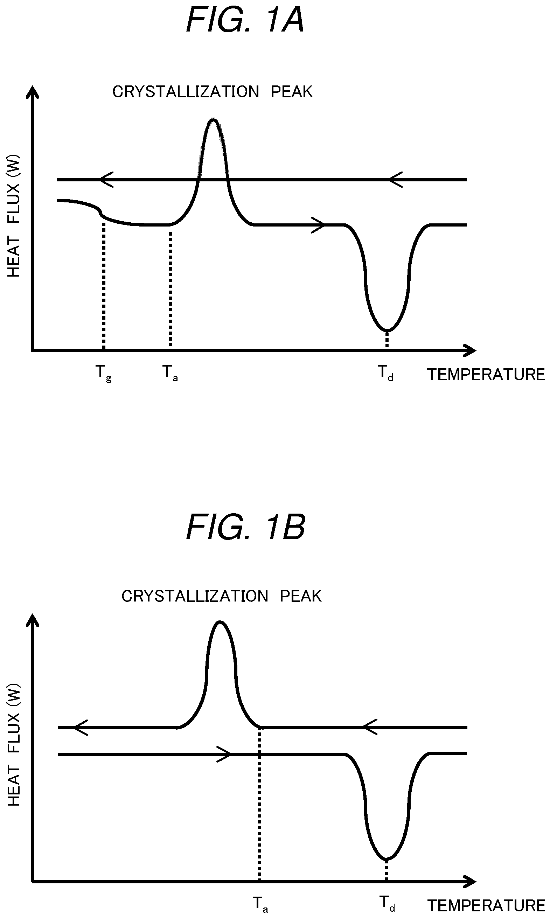

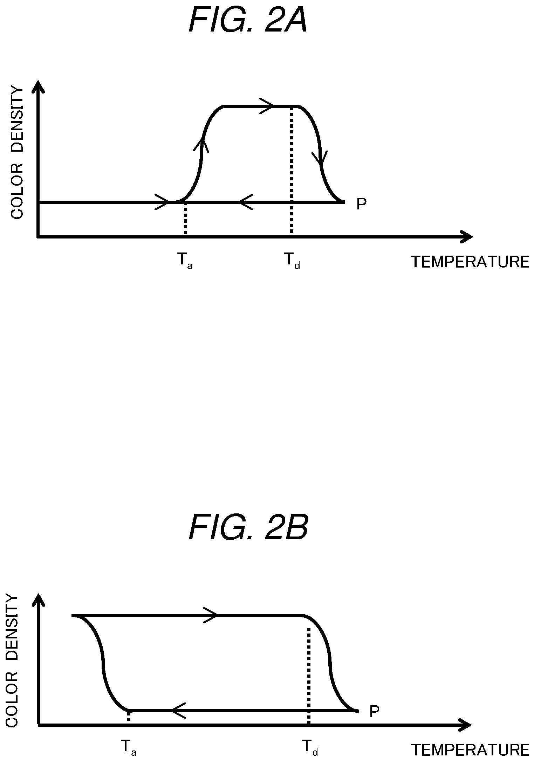

The configuration of a temperature indicating material of the present embodiment will be explained using FIGS. 1 and 2.

### <Temperature indicating material>

As a temperature indicating material, a material whose color density reversibly is changed by a temperature change (heating/cooling) is used. The temperature indicating material includes a leuco dye that is an electron-donating compound, a color developer that is an electron-accepting compound, and a decolorant for controlling the temperature range of coloration.

FIGS. 1A and 1B are a view showing a differential scanning calorimetry (DSC) curve of a temperature indicating material according to one embodiment. Here, the temperature indicating material A is a material that solidifies in an amorphous state without crystallization when quenched after melting while the temperature indicating material B is a material that becomes liquid in a supercooled state when it is cooled after melting.

FIG. 1A shows a differential scanning calorimetry (DSC) curve of the temperature indicating material A. Since crystallization does not occur during a cooling process (leftward arrow (←) in the figure), no exothermic peak caused by crystallization is observed. On the other hand, an exothermic peak caused by crystallization is observed during a heating process (rightward arrow (→) in the figure). Tₐ is a starting temperature during a heating process (crystallization starting temperature during the heating process). T_{d} is a melting point.

The starting temperature Tₐ depends on a heating rate or an elapsed time. When the material is heated at a low heating rate, a starting temperature Tₐ appears at a low temperature; when the material is heated at a high heating rate, a starting temperature Tₐ appears at a high temperature or no starting temperature Tₐ appears and the material melts at a melting point T_{d}. Occurrence of crystallization develops a color; and therefore, the starting temperature Tₐ is set in conformity with the requirements of a detecting temperature and a detecting time as the temperature detecting material. For example, when a temperature indicating material that starts crystallization after one hour has elapsed at a temperature T1, it can be used as a material that uses the temperature T1 as a starting temperature Tₐ and detects that one hour has passed at the starting temperature Tₐ. T_{g} is a glass transition point. Crystallization does not start at a temperature not higher than the glass transition point T_{g}. In the case of a material that easily crystallizes, the material easily crystallizes at a temperature not lower than the glass transition point and hence the starting temperature Tₐ is often the same as the glass transition point T_{g}.

FIG. 1B shows a differential scanning calorimetry (DSC) curve of the temperature indicating material B. Tₐ is a starting temperature (crystallization starting temperature during a cooling process) of an exothermic peak caused by crystallization during the cooling process. T_{d} is a melting point. The starting temperature Tₐ depends on a cooling rate or an elapsed time. When the material is cooled at a low cooling rate, a starting temperature Tₐ appears at a high temperature; and when the material is cooled at a high cooling rate, a starting temperature Tₐ appears at a low temperature. Occurrence of crystallization develops a color; and therefore, the starting temperature Tₐ is set in conformity with the requirements of a detecting temperature and a detecting time as the temperature detecting material. For example, when a temperature indicating material that starts crystallization after one hour has elapsed at a temperature T2, it can be used as a material that uses the temperature T2 as a starting temperature Tₐ and detects that one hour has passed at the starting temperature Tₐ. Further, in the case of a material that is unlikely to be in a supercooled state, the material easily crystallizes at a temperature not higher than a melting point T_{d} and hence the starting temperature Tₐ is the same as the melting point T_{d}. Such a material cannot be used as a temperature indicating material. Thus, a material that is likely to be in a supercooled state and has a large difference between a crystallization start temperature Tₐ and a melting point T_{d} is preferred.

Hereafter, a temperature detecting material that can change its color by integration of time and temperature, and initialize its color by heating at a high temperature will be explained.

FIGS. 2A and 2B are views showing color density changes of a temperature detecting material according to the embodiment. In the figures, the vertical axis represents a color density and the horizontal axis represents a temperature.

FIG. 2A is a view showing a relationship between a color density and a temperature in the temperature indicating material A. The temperature indicating material A has a hysteresis characteristic in color density change. In the case that a material unlikely to crystalize is used as a decolorant in the temperature indicating material A, when the temperature indicating material A is quenched from state P in a molten state at a temperature not lower than a decolorization starting temperature T_{d} to a temperature not higher than a color development starting temperature Tₐ, the temperature indicating material A form an amorphous state while the decolorant incorporates the color developer therein, thereby maintaining the decolored state. When the temperature is raised, from this state, to a temperature not lower than the color development starting temperature Tₐ during a heating process, the decolorant crystallizes and causes color development. Thus, use of a temperature detecting material containing the temperature indicating material A can detect whether the temperature deviates from a control range and reaches a temperature not lower than Tₐ when the temperature is controlled to be lower than the color development starting temperature Tₐ.

FIG. 2B is a view showing a relationship between a color density and a temperature in the temperature indicating material B. The temperature indicating material B has a hysteresis characteristic in color density change. When the temperature indicating material B decreases its temperature from state P in a molten state at a temperature not lower than a decolorization temperature T_{d}, it maintains the decolored state up to the color development starting temperature Tₐ. When the temperature becomes the color development starting temperature Tₐ or lower, the decolorant becomes in a crystalline state at a temperature not higher than the solidifying point, the leuco dye and the color developer are separated from the decolorant, causing color development by coupling the leuco dye and the color developer. Thus, use of a temperature detecting material containing the temperature indicating material B can detect whether the temperature deviates from a control range and reaches a temperature not higher than Tₐ when the temperature is controlled to be higher than the color development starting temperature Tₐ.

When a temperature detecting material is used for temperature management of articles such as commodities during distribution of the articles, it is required to cause no color reversion. The reason is that: though a color change is caused once by temperature increase during distribution process, if the color is return back to original by temperature decrease or increase again in the process of distribution, the presence or absence of a temperature change cannot be found later. However, the temperature indicating material according to the present embodiment does not reverse its color unless re-heated to a temperature not lower than the decolorization temperature T_{d}, thus enabling to know a change in temperature environment.

Next, the leuco dye, the color developer, and the decolorant of each temperature indicating material are described.

### (Leuco dye)

As a leuco dye, usable are those that are an electron-donating compound and conventionally known as dyes for pressure sensitive copying paper or thermosensitive recording paper. Examples thereof include triphenylmethane phthalide-based, fluoran-based, phenothiazine-based, indolyl phthalide-based, leuco auramine-based, spiropyran-based, rhodamine lactam-based, triphenylmethane-based, triazene-based, spirophthalan xanthene-based, naphtholactam-based, and azomethine-based dyes. Specific examples of the leuco dye include 9-(N-ethyl-N-isopentylamino)spiro[benzo[a]xanthene-12, 3'-phthalide], 2-methyl-6-(Np-tolyl-N-ethylamino)-fluoran6-(diethylamino)-2-[(3-trifluoromethyl)anilino] xanthene-9-spiro-3'-phthalide, 3,3-bis(p-diethylaminophenyl)-6-dimethylamino phthalide, 2'-anilino-6'-(dibutylamino)-3'-methylspiro[phthalide-3, 9'-xanthene], 3-(4-diethylamino-2-methylphenyl)-3-(1-ethyl-2-methylindole-3-yl)-4-azaphthalide, and 1-ethyl-8-[N-ethyl-N-(4-methylphenyl)amino]-2, 2, 4-trimethyl-1, 2-dihydrospiro[11H-chromeno[2, 3-g]quinoline-11, 3'-phthalide].

For a temperature indicating material, two or more leuco dyes may be used in combination.

### (Color developer)

A color developer, upon contact with an electron-donating leuco dye, changes a structure of the leuco dye and causes coloration. As the color developer, usable are those known as color developers used for thermosensitive recording paper, pressure sensitive copying paper or the like. Specific examples of such a color developer include phenols such as benzyl 4-hydroxybenzoate, 2, 2'-biphenol, 1, 1-bis(3-cyclohexyl-4-hydroxyphenyl)cyclohexane, 2, 2-bis(3-cyclohexyl-4-hydroxyphenyl)propane, bisphenol A, bisphenol F, bis(4-hydroxyphenyl) sulfide, paraoxybenzoic acid ester, and gallic acid ester. The color developer is not limited to the above; and as long as a compound is an electron acceptor and can color a leuco dye, it can be used. Further, metallic salts of carboxylic acid derivatives; salicylic acids and salicylic acid metallic salts; sulfonic acids; sulfonates; phosphoric acids; phosphoric acid metallic salts; acidic phosphoric acid esters; acidic phosphoric acid ester metallic salts; phosphorous acids; phosphorous acid metallic salts; and the like may also be used.

However, the color density that is created from color development of a leuco dye by a color developer is varied depending on the material to be used for a decolorant. With respect to: a decolored state wherein a supercooled state or an amorphous state is formed while a decolorant incorporates a color developer therein; and a color-developed state wherein a decolorant is crystallized to allow a leuco dye and a color developer to be coupled to each other, the color density of each of them depends on the combination of a color developer and a decolorant, and the ratio therebetween. Thus, for combinations of a leuco dye, and an ester compound or a steroid compound described below as a decolorant, it is necessary to select a color developer that produces a decolored state with a sufficiently low color density (decoloring property) and a color-developed state with a sufficiently high color density (color developing property).

Further, at the time of color initialization or marking by a thermal marking device, the temperature is increased to a melting point or higher of a temperature indicating material used for a temperature detecting material or a temperature detecting ink; and therefore, heat resistance is required not to cause a change of hue or the like at the time of heating. Specifically, no significant fading at the time of heating to a high temperature of about 120°C to 180°C is required. When it is applied for a thermal marking device, an ink has to be kept at an appropriate viscosity in a liquid state for a long time and therefore, is required to cause no significant fading even when exposed to a temperature of about 120°C to 180°C for several hours to several tens of hours.

Further, an ink or indicator is required to have light resistance against the fading even when exposed to indoor lighting or outdoor light for a long time. Among materials used for a temperature detecting material and a temperature detecting ink, a leuco dye and a color developer are materials that are most likely to cause photodegradation. Since a leuco dye affects a hue of ink, it is better to have a high selectivity to customer requests and it is not limited in this embodiment. On the other hand, a material for a higher light resistance of a temperature indicating material is preferred when other characteristics of color developer are equivalent.

To that end, a color developer is required to exhibit high color developing and decoloring properties to various ester compounds or steroid compounds as decolorants, and to have high heat resistance and light resistance. Specific examples of these color developers include 2,2'-bisphenol, 4,4'-cyclohexylidene bis(2-cyclohexylphenol), 2,2-bis(3-cyclohexyl-4-hydroxyphenyl)propane, 2,2-bis(2-hydroxy-5-biphenylyl)propane, 4,4'-cyclohexylidene bis(o-cresol), 2,2-bis(4-hydroxy-3-methylphenyl)propane, 1,1-bis(4-hydroxyphenyl)cyclohexane, bisphenol P, 4,4'-(9-fluorenylidene)diphenol, bisphenol A, bisphenol M, 4,4'-thiodiphenol, bisphenol S, 4,4'-biphenol, 4,4'-oxydiphenol, 4,4'-dihydroxydiphenyl methane, 4,4'-(1,3-dimethylbutylidene)diphenol, 4,4'-(2-ethylhexylidene)diphenol, 4,4'-ethylidenebisphenol(bisphenol E), 4,4'-(2-hydroxybenzylidene)bis(2,3,6-trimethylphenol), 1,1'-methylene bis(2-naphthol), and tetrabromobisphenol A; and these bisphenol compounds are preferably used.

As a temperature indicating material of this embodiment, these color developers may be used alone or in combination of two or more types thereof. Combination of color developers can adjust the color density of a leuco dye during color development. The amount of the color developer to be used is selected in accordance with a desired color density. For example, usually, the amount may be selected within the range of about 0.1 to 100 parts by weight relative to 1 part by weight of a leuco dye.

### (Decolorant)

A decolorant is a compound capable of dissociating a bond between a leuco dye and a color developer and controlling color developing temperatures of the leuco dye and the color developer. In general, in a temperature range where a leuco dye is in a colored state, a decolorant is solidified in a phase separation state. Further, in a temperature range where a leuco dye is in a decolored state, a decolorant forms a molten or amorphous state, exhibiting a function of dissociating a bond between a leuco dye and a color developer. Thus, the temperature for change of state of a decolorant is important for the temperature control of a temperature indicating material.

As a material of a decolorant, a material capable of dissociating a bond between a leuco dye and a color developer can be used widely. Various materials may be a decolorant as long as they have a low polarity and exhibit no color developing property to a leuco dye and they have a polarity high enough to dissolve a leuco dye and a color developer. Various organic compounds can be typically used, such as hydroxy compounds, ester compounds, peroxy compounds, carbonyl compounds, aromatic compounds, aliphatic compounds, halides, amino compounds, imino compounds, N-oxide compounds, hydroxylamine compounds, nitro compounds, azo compounds, diazo compounds, azide compounds, ether compounds, fatty compounds, sugar compounds, peptide compounds, nucleic acid compounds, alkaloid compounds, and steroid compounds. Specifically, the decolorant includes ester compounds such as tricaprin, isopropyl myristate, m-tolyl acetate, diethyl sebacate, dimethyl adipate, 1,4-diacetoxybutane, decanoic acid decyl ester, diethyl phenylmalonate, diisobutyl phthalate, triethyl citrate, benzyl butyl phthalate, butyl phthalyl butyl glycolate, methyl N-methylanthranilate, ethyl anthranilate, 2-hydroxyethyl salicylate, methyl nicotinate, butyl 4-aminobenzoate, methyl p-toluate, ethyl 4-nitrobenzoate, 2-phenylethyl phenylacetate, benzyl cinnamate, methyl acetoacetate, geranyl acetate, dimethyl succinate, dimethyl sebacate, diethyl oxalacetate, monoolein, butyl palmitate, ethyl stearate, methyl palmitate, methyl stearate, linalyl acetate, di-n-octyl phthalate, benzyl benzoate, diethylene glycol dibenzoate, methyl p-anisate, m-tolyl acetate, cinnamyl cinnamate, 2-phenylethyl propionate, butyl stearate, ethyl myristate, methyl myristate, methyl anthranilate, neryl acetate, isopropyl palmitate, ethyl 4-fluorobenzoate, cyclandelate (mixture of isomers), butopyronoxyl, ethyl 2-bromopropionate, tricaprilin, ethyl levulinate, hexadecyl palmitate, tert-butyl acetate, 1,1-ethanediol diacetate, dimethyl oxalate, tristearin, methyl acetylsalicylate, benzal diacetate, methyl 2-benzoylbenzoate, ethyl 2,3-dibromobutyrate, ethyl 2-furancarboxylate, ethyl acetopyruvate, ethyl vanillate, dimethyl itaconate, methyl 3-bromobenzoate, monoethyl adipate, dimethyl adipate, 1,4-diacetoxybutane, diethylene glycol diacetate, ethyl palmitate, diethyl terephthalate, phenyl propionate, phenyl stearate, 1-naphthyl acetate, methyl behenate, methyl arachidate, methyl 4-chlorobenzoate, methyl sorbate, ethyl isonicotinate, dimethyl dodecanedioate, methyl heptadecanoate, ethyl α-cyanocinnamate, N-phenylglycine ethyl ester, diethyl itaconate, methyl picolinate, methyl isonicotinate, methyl DL-mandelate, methyl 3-aminobenzoate, methyl 4-methylsalicylate, diethyl benzylidenemalonate, isoamyl DL-mandelate, triethyl methanetricarboxylate, diethyl formamidomalonate, 1,2-bis(chloroacetoxy)ethane, methyl pentadecanoate, ethyl arachidate, ethyl 6-bromohexanoate, monoethyl pimelate, hexadecyl lactate, ethyl benzilate, mefenpyr-diethyl, procaine, dicyclohexyl phthalate, 4-tert-butylphenyl salicylate, isobutyl 4-aminobenzoate, butyl 4-hydroxybenzoate, tripalmitin, 1,2-diacetoxybenzene, dimethyl isophthalate, monoethyl fumarate, methyl vanillate, methyl 3-amino-2-thiophenecarboxylate, etomidate, cloquintocet-mexyl, methyl benzilate, diphenyl phthalate, phenyl benzoate, propyl 4-aminobenzoate, ethylene glycol dibenzoate, triacetin, ethyl pentafluoropropionate, methyl 3-nitrobenzoate, 4-nitrophenyl acetate, methyl 3-hydroxy-2-naphthoate, trimethyl citrate, ethyl 3-hydroxybenzoate, methyl 3-hydroxybenzoate, trimebutine, 4-methoxybenzyl acetate, pentaerythritol tetraacetate, methyl 4-bromobenzoate, ethyl 1-naphthaleneacetate, 5-nitro-2-furaldehyde diacetate, ethyl 4-aminobenzoate, propylparaben, 1,2,4-triacetoxybenzene, methyl 4-nitrobenzoate, diethyl acetamidomalonate, valethamate bromide, 2-naphthyl benzoate, dimethyl fumarate, adiphenine hydrochloride, benzyl 4-hydroxybenzoate, ethyl 4-hydroxybenzoate, vinyl butyrate, vitamin K4, methyl 4-iodobenzoate, methyl 3,3-dimethylacrylate, propyl gallate, 1,4-diacetoxybenzene, diethyl mesoxalate, dimethyl 1,4-cyclohexanedicarboxylate (mixture of cis- and trans-), triethyl 1,1,2-ethanetricarboxylate, dimethyl hexafluoroglutarate, amyl benzoate, ethyl 3-bromobenzoate, ethyl 5-bromo-2-chlorobenzoate, bis(2-ethylhexyl) phthalate, diethyl allylmalonate, diethyl bromomalonate, diethyl ethoxymethylenemalonate, diethyl ethylmalonate, diethyl fumarate, diethyl maleate, diethyl malonate, diethyl phthalate, dimethyl 1,3-acetonedicarboxylate, dimethyl phthalate, ethyl 3-aminobenzoate, ethyl benzoate, ethyl 4-dimethylaminobenzoate, ethyl nicotinate, ethyl phenylpropiolate, ethyl pyridine-2-carboxylate, ethyl 2-pyridylacetate, ethyl 3-pyridylacetate, methyl benzoate, ethyl phenylacetate, amyl 4-hydroxybenzoate, 2,5-diacetoxytoluene, ethyl 4-oxazolecarboxylate, trimethyl 1,3,5-cyclohexanetricarboxylate (mixture of cis- and trans-), methyl 3-(chlorosulfonyl)-2-thiophenecarboxylate, pentaerythritol distearate, benzyl laurate, diethyl acetylenedicarboxylate, phenyl methacrylate, benzyl acetate, dimethyl glutarate, ethyl 2-oxocyclohexanecarboxylate, ethyl phenylcyanoacetate, ethyl 1-piperazinecarboxylate, methyl benzoylformate, methyl phenylacetate, phenyl acetate, diethyl succinate, tributyrin, diethyl methylmalonate, dimethyl oxalate, diethyl 1,1-cyclopropane dicarboxylate, dibenzyl malonate, methyl 4-tert-butylbenzoate, ethyl 2-oxocyclopentanecarboxylate, methyl cyclohexanecarboxylate, ethyl 4-methoxyphenylacetate, methyl 4-fluorobenzoylacetate, dimethyl maleate, methyl terephthalaldehydate, ethyl 4-bromobenzoate, methyl 2-bromobenzoate, methyl 2-iodobenzoate, ethyl 3-iodobenzoate, ethyl 3-furancarboxylate, diallyl phthalate, benzyl bromoacetate, dimethyl bromomalonate, methyl m-toluate, diethyl 1,3-acetonedicarboxylate, methyl phenylpropiolate, 1-naphthyl butyrate, ethyl o-toluate, methyl 2-oxocyclopentanecarboxylate, isobutyl benzoate, ethyl 3-phenylpropionate, di-tert-butyl malonate, dibutyl sebacate, diethyl adipate, diethyl terephthalate, dipropyl phthalate, 1,1-ethanediol diacetate, diisopropyl adipate, diisopropyl fumarate, ethyl cinnamate, 2-ethylhexyl 2-cyano-3,3-diphenylacrylate, neopentyl glycol diacrylate, triolein, ethyl benzoylacetate, ethyl p-anisate, diethyl suberate, sorbitan tristearate, sorbitan monostearate, stearamide, glycerol monostearate, glycerol distearate, 3-(tert-butoxycarbonyl)phenylboronic acid, racecadotril, 4-[(6-acryloyloxy)hexyloxy]-4'-cyanobiphenyl, 2-(dimethylamino)vinyl 3-pyridyl ketone, stearyl acrylate, ethyl 4-bromophenylacetate, dibenzyl phthalate, methyl 3,5-dimethoxybenzoate, eugenol acetate, didodecyl 3,3'-thiodipropionate, vanillin acetate, diphenyl carbonate, ethyl oxanilate, methyl terephthalaldehydate, dimethyl 4-nitrophthalate, ethyl (4-nitrobenzoyl)acetate, dimethyl nitroterephthalate, methyl 2-methoxy-5-(methylsulfonyl)benzoate, methyl 3-methyl-4-nitrobenzoate, dimethyl 2,3-naphthalenedicarboxylate, bis-(2-ethylhexyl) adipate, 4'-acetoxyacetophenone, ethyl trans-3-benzoylacrylate, ethyl coumarin-3-carboxylate, BAPTA tetraethyl ester, methyl 2,6-dimethoxybenzoate, di-tert-butyl iminodicarboxylate, benzyl p-benzyloxybenzoate, methyl 3,4,5-trimethoxybenzoate, methyl 3-amino-4-methoxybenzoate, diethylene glycol distearate, ditetradecyl 3,3'-thiodipropionate, ethyl 4-nitrophenylacetate, methyl 4-chloro-3-nitrobenzoate, 1,4-dipropionyloxybenzene, dimethyl terephthalate, ethyl 4-nitrocinnamate, dimethyl 5-nitroisophthalate, triethyl 1,3,5-benzenetricarboxylate, diethyl N-(4-aminobenzoyl)-L-glutamate, 2-methyl-1-naphthyl acetate, 7-acetoxy-4-methylcoumarin, methyl 4-amino-2-methoxybenzoate, 4,4'-diacetoxybiphenyl, dimethyl 5-aminoisophthalate, diethyl 1,4-dihydro-2,6-dimethyl-3,5-pyridinedicarboxylate, dimethyl 4,4'-biphenyldicarboxylate, 4-benzyloxyphenylethyl octanoate, 4-benzyloxyphenylethyl nonanoate, 4-benzyloxyphenylethyl decanoate, 4-benzyloxyphenylethyl undecanoate, 4-benzyloxyphenylethyl dodecanoate, 4-benzyloxyphenylethyl tridecanoate, 4-benzyloxyphenylethyl tetradecanoate, 4-benzyloxyphenylethyl pentadecanoate, 4-benzyloxyphenylethyl hexadecanoate, 4-benzyloxyphenylethyl heptadecanoate, 4-benzyloxyphenylethyl octadecanoate, 1,1-diphenylmethyl octanoate, 1,1-diphenylmethyl nonanoate, 1,1-diphenylmethyl decanoate, 1,1-diphenylmethyl undecanoate, 1,1-diphenylmethyl dodecanoate, 1,1-diphenylmethyl tridecanoate, 1,1-diphenylmethyl tetradecanoate, 1,1-diphenylmethyl pentadecanoate, 1,1-diphenylmethyl hexadecanoate, 1,1-diphenylmethyl heptadecanoate, and 1,1-diphenylmethyl octadecanoate; and steroid compounds such as cholesterol, cholesteryl bromide, β-estradiol, methylandrostenediol, pregnenolone, cholesterol benzoate, cholesterol acetate, cholesterol linoleate, cholesterol palmitate, cholesterol stearate, cholesterol n-octanoate, cholesteryl oleate, 3-chlorocholestene, cholesterol trans-cinnamate, cholesteryl decanoate, cholesterol hydrocinnamate, cholesterol laurate, cholesterol butyrate, cholesterol formate, cholesterol heptanoate, cholesterol hexanoate, cholesterol hydrogen succinate, cholesterol myristate, cholesterol propionate, cholesterol valerate, cholesterol hydrogen phthalate, cholesterol phenylacetate, cholesterol chloroformate, cholesterol 2,4-dichlorobenzoate, cholesterol pelargonate, cholesterol nonyl carbonate, cholesterol heptyl carbonate, cholesterol oleyl carbonate, cholesterol methyl carbonate, cholesterol ethyl carbonate, cholesterol isopropyl carbonate, cholesterol butyl carbonate, cholesterol isobutyl carbonate, cholesterol amyl carbonate, cholesterol n-octyl carbonate, cholesterol hexyl carbonate, allylestrenol, altrenogest, 9(10)-dehydronandrolone, estrone, ethynylestradiol, estriol, estradiol benzoate, β-estradiol 17-cypionate, β-estradiol 17-valerate, α-estradiol, β-estradiol 17-heptanoate, gestrinone, mestranol, 2-methoxy-β-estradiol, nandrolone, (-)-norgestrel, quinestrol, trenbolone, tibolone, stanolone, androsterone, abiraterone, abiraterone acetate, dehydroepiandrosterone, dehydroepiandrosterone acetate, ethisterone, epiandrosterone, 17β-hydroxy-17-methylandrosta-1,4-dien-3-one, methylandrostenediol, methyltestosterone, Δ9(11)-methyltestosterone, 1α-methylandrostan-17β-ol-3-one, 17α-methylandrostan-17β-ol-3-one, stanozolol, testosterone, testosterone propionate, altrenogest, 16-dehydropregnenolone acetate, acetic acid 16,17-epoxypregnenolone, 11α-hydroxyprogesterone, 17α-hydroxyprogesterone caproate, 17α-hydroxyprogesterone, pregnenolone acetate, 17α-hydroxyprogesterone acetate, megestrol acetate, medroxyprogesterone acetate, pregnenolone acetate, 5β-pregnane-3α,20α-diol, budesonide, corticosterone, cortisone acetate, cortisone, cortexolone, deoxycorticosterone acetate, deflazacort, hydrocortisone acetate, hydrocortisone, hydrocortisone 17-butyrate, 6α-methylprednisolone, prednisolone, prednisone, prednisolone acetate, sodium deoxycholate, sodium cholate, methyl cholate, methyl hyodeoxycholate, β-cholestanol, cholesterol-5α,6α-epoxide, diosgenin, ergosterol, β-sitosterol, stigmasterol, and β-sitosterol acetate. Those compounds are preferably contained from the viewpoint of compatibility with a leuco dye and a color developer. Naturally, a decolorant is not limited to those compounds and any material is acceptable as long as the material can dissociate a bond between a leuco dye and a color developer.

Further, these decolorants may be used alone or in combination of two or more types thereof. Combination of decolorants enables adjustment of a solidifying point, a crystallization speed, a melting point and a glass transition point.

A decolorant used for a temperature indicating material A must not be crystallized during a quenching process from a temperature at which the decolorant melts but need to be amorphized near a glass transition point. For that, a material that hardly crystalizes is preferred. Almost all materials form amorphous states if they are quenched very rapidly but, if practical applicability is taken into consideration, a material that hardly crystallizes to the extent of forming an amorphous state by quenching with a generally used cooling device is preferred. A material that is unlikely to crystallize to the extent of forming an amorphous state during a process of cooling down naturally from a molten state at a temperature not lower than a melting point is further most preferred. For the above condition, preferred is a decolorant that forms an amorphous state when it is cooled from a melting point to a glass transition point at a rate of at least 20°C/min. or lower; and most preferred is a decolorant that forms an amorphous state when it is cooled from a melting point to a glass transition point at a rate of 1°C/min. or lower.

As a decolorant used for a temperature indicating material B, desired is the decolorant having a supercooled state in a wide temperature range, in other words having a large temperature difference between a solidifying point and a melting point of the decolorant. Further, the melting point or the solidifying point depends on a target temperature control range.

For initialization of a color of a temperature indicating material, the temperature must be increased to not lower than the melting point of the decolorant for the temperature indicating material. The temperature for color initialization has to be high in such a manner that initialization is unlikely to occur near a control temperature; however, in consideration of the practical applicability, it is desirably in a temperature range that can be created by a generally used heating device. Further, a microcapsule or a matrix material is used in a temperature detecting material to protect a temperature indicating material and therefore, heat resistance of these materials must be taken into consideration. Specifically, the temperature range is preferably about 40°C to 250°C, and most preferably about 60°C to 150°C.

A temperature indicating material includes at least a leuco dye, a color developer, and a decolorant described above. However, when a material has a color developing function and a decoloring function in one molecule, a color developer and a decolorant are not necessary. Further, as long as the material maintains a property of changing its color by crystallization, it may include materials other than a leuco dye, a color developer and a decolorant. For example, containing a dye or a pigment, not a leuco dye, can change a color at the time of decoloring or color developing.

### <Temperature detecting material>

A temperature detecting material includes at least a phase separation structure formed by mixing the above-described temperature indicating material and a matrix material. Exemplary forms thereof are described below.

### (Matrix material)

A matrix material must be a material that does not deteriorate the color developing property and the decoloring property of a temperature indicating material when it is mixed with the temperature indicating material. Thus, it is preferred that the matrix material is a material which does not exhibit a color developing property by itself. As such a material, a nonpolar material that is not an electron acceptor can be used.

Further, in order to form a phase separation structure having a temperature indicating material dispersed in a matrix material, a material satisfying the following two conditions has to be used as the matrix material. The two conditions are that: the matrix material is in a solid state at an operating temperature where the temperature detecting material is used; and the matrix material has a low compatibility with a leuco dye, a decolorant and a color developer. This is because a temperature detecting function is deteriorated in a state where any material of a leuco dye, a color developer and a decolorant produces a solid-soluble state with a matrix material. In addition, use of a matrix material in a solid state at the operating temperature makes it easy to handle a temperature detecting material.

As a matrix material satisfying the above conditions, preferably usable is a material having an energy δp of 3 or less given by intermolecular dipole interaction and an energy δh of 3 or less given by intermolecular hydrogen bond, both of which are estimated by Hansen solubility parameter. Specifically, a material not having a polar group or a material formed of hydrocarbon alone can be preferably used. Examples thereof include paraffin-based, microcrystalline-based, olefin-based, polypropylene-based, and polyethylene-based waxes; low-molecular or high-molecular materials having many skeletons of, for example, propylene, ethylene, styrene, cycloolefin, siloxane, terpene or the like; and copolymers thereof.

Among the above materials, a material that forms a low-viscosity melt at a melting point or higher and is readily solidified at a melting point or lower has a good handleability. Further, a material that is dissolved in an organic solvent and is solidified in the volatilization process of the organic solvent, also has a good handleability. Specifically, examples thereof include paraffin wax, microcrystalline wax, polyolefin, polyethylene, polypropylene, cycloolefin, polystyrene, terpene resin, silicone resin, silicone oil.

Examples of the polyolefin include low-molecular polyethylenes and low-molecular polypropylenes. The molecular weight and the viscosity in a liquid state of the polyolefin are not particularly limited, but a polyolefin with a low viscosity in a liquid state has less air bubbles included therein and a good formability. Specifically, a polyolefin has preferably a molecular weight of 50,000 or less and a viscosity near a melting point of 5 to 50,000 mPa×s, and more preferably a molecular weight of 10,000 or less and a viscosity near a melting point of 10 to 10,000 mPa×s.

Further, several types of these matrix materials may be used in combination.

### <Phase separation structure>

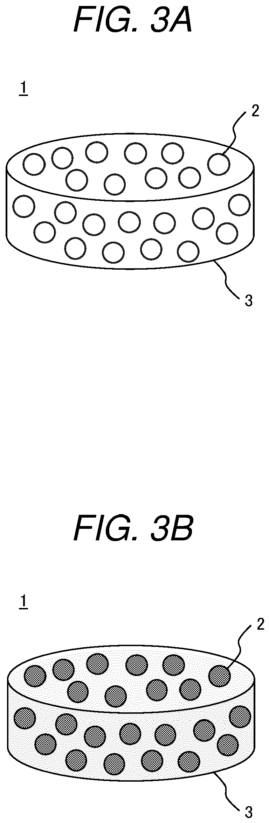

FIGS. 3A and 3B are a schematic view showing a phase separation structure of a temperature detecting material; FIG. 3A shows a decolored state; and FIG. 3B shows a color developed state. The temperature detecting material 1 forms a phase separation structure having temperature indicating materials 2 dispersed in a matrix material 3. In other words, it forms a structure wherein phases including a leuco dye, a color developer and a decolorant are dispersed in the matrix material.

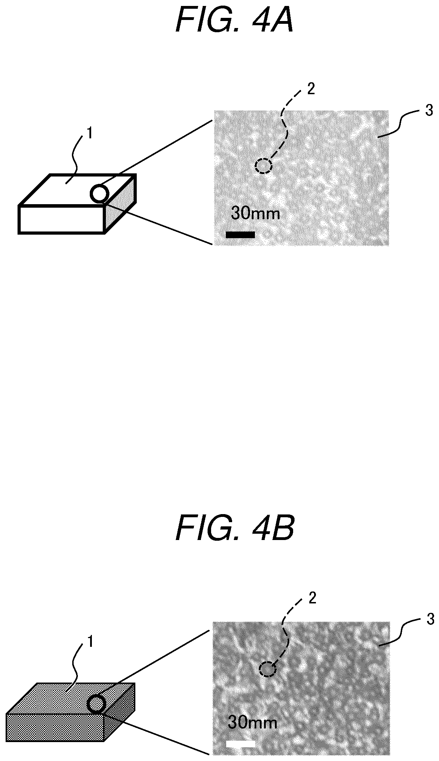

FIGS. 4A and 4B show optical micrographs of temperature detecting materials; FIG. 4A shows a decolored state; and FIG. 4B shows a color developed state. That is, FIG. 4A is an optical micrograph of the temperature detecting material 1 in a state where temperature indicating materials are decolored while FIG. 4B is an optical micrograph of the temperature detecting material 1 in a state where temperature indicating materials have developed color. From optical micrographs, it is confirmed that the temperature detecting material 1 forms a phase separation structure having temperature indicating materials 2 dispersed in the matrix material 3.

The temperature detecting material of the present embodiment uses a matrix material and a temperature indicating material wherein the melting point of the matrix material is near a melting point of the temperature indicating material. The coloring temperature of the temperature indicating material is near the glass transition point of the temperature indicating material and that temperature does not melt the matrix material; and therefore, the temperature detecting material maintains a solid state during the color change process of the temperature indicating material. On the other hand, when the temperature indicating material changes its state from solid to liquid at a temperature not lower than the melting point and initialization of color occurs, the matrix material also melts. Thus, when it is applied to the below-described thermal marking device, the temperature detecting material is melted along with color initialization of the temperature indicating material; and heating to a temperature slightly higher than the initialization temperature can discharge the temperature detecting material and provide marking thereof.

Meanwhile, it is not a problem that the temperature detecting material uses a matrix material and a temperature indicating material wherein the temperature of the melting point of the matrix material is distant from that of the temperature indicating material. For example, in the case that the melting point of the matrix material is higher than that of the temperature indicating material, when the temperature indicating material changes its state from solid to liquid and initialization of color occurs, the matrix material does not melt, so that the temperature detecting material can maintain the solid state.

Further, a matrix material and the temperature indicating material are phase-separated and the matrix material does not affect the color change of the temperature indicating material; and therefore, the temperature indicating material can maintain the temperature detecting function as it is.

The concentration of the temperature indicating material contained in the matrix material is not particularly limited, but it is preferred that 1 part by weight of the temperature indicating material should be contained relative to 0.1 parts by weight or more and 100 parts by weight or less of the matrix material. When the concentration of the matrix material relative to 1 part by weight of the temperature indicating material is 100 parts by weight or less, a decrease of visibility of the temperature detecting material can be prevented. Further, when the concentration of the matrix material is equal to or higher than that of the temperature indicating material, this can prevent a structure having connected matrix material and connected temperature indicating material (hereinafter, referred to as co-continuous structure). Even in the co-continuous structure, since the matrix material and the temperature indicating material are phase-separated, the function as the temperature detecting material is not deteriorated; however, the long-term stability may be deteriorated by liquid leakage of the temperature indicating material from the inside of the matrix material. In addition, when the temperature indicating material is crystallized, crystal growth progresses between adjacent temperature indicating materials; and there are concerns that the reproducibility of the color development time may decrease and the risk of color irregularity occurrences may increase. Thus, it is more preferred that the matrix material relative to 1 part by weight of the temperature indicating material is about 1 to 10 parts by weight.

The major axis of the phase composed of the temperature indicating material dispersed in the matrix material is preferably 100 nm or more and 1 mm or less, and more preferably 100 nm or more and 100 um or less. The size of the phase composed of the temperature indicating material is not particularly limited; however, when the size is 100 nm or more, the influence of the interface between the temperature indicating material and the matrix material on the detection temperature can be reduced. In addition, when the size is 1 mm or less, it is difficult to visually distinguish the temperature indicating material and the matrix material from each other, so that color irregularities of the temperature detecting material can be reduced. The size of the phase composed of the temperature indicating material can be reduced by adding a surfactant or by cooling while stirring in the cooling step. The major axis of the phase composed of the temperature indicating material is the major axis of an approximate ellipse obtained by approximating the phase composed of the temperature indicating material to an ellipse.

The temperature detecting material may include a material other than the leuco dye, the color developer, and the decolorant as long as it can keep its property of changing its color by crystallization. For example, microcapsules or the like may be contained. Microencapsulating a temperature indicating material and mixing into a temperature detecting material allow two or more types of temperature indicating materials to be contained in a temperature detecting material, so that a temperature detecting material capable of detecting two or more temperature changes can be produced.

Microencapsulation of a temperature indicating material improves the environmental resistance of the temperature indicating material to light, humidity and the like, providing the storage stability, the stabilization of coloring property and the like. In addition, microencapsulation can reduce influences from other compounds such as a resin agent and an additive on a leuco dye, a color developer and a decolorant when an ink is prepared.

For the microencapsulation, various known methods can be applied. Examples of the methods include, but not limited to, an emulsion polymerization method, a suspension polymerization method, a coacervation method, an interfacial polymerization method, and a spray drying method. In addition, two or more different methods may be used in combination.

Examples of a resin film used for a microcapsule include, but not limited to: a urea resin film including a polyvalent amine and a carbonyl compound; a melamine resin film including a melamine formalin prepolymer, a methylol melamine prepolymer, and a methylated melamine prepolymer; a urethane resin film including a polyvalent isocyanate and a polyol compound; an amide resin film including a polybasic acid chloride and a polyvalent amine; and a vinyl resin film including any one of various monomers such as vinyl acetate, styrene, (meth)acrylic acid ester, acrylonitrile, vinyl chloride, etc. Further, an additional treatment may be conducted: for example, surface treatment of a formed resin film is conducted to adjust the surface energy for preparation of an ink or paint, thereby improving the dispersion stability of microcapsules.

Further, the diameter of a microcapsule is preferably in the range of about 0.1 to 100 µm, and more preferably in the range of 0.1 to 10 um because the adaptability to devices, the storage stability and the like are issues to be dealt with.

A phase separation structure can be crushed and pulverized by a mortar or the like. This allows it to be handled in the same manner as a microcapsule.

A phase separation structure and microcapsules may be subjected to surface treatment through silane coupling treatment, surface grafting, corona treatment, etc. in order to stabilize dispersion to make ink, improve resistance against a solvent, and improve environmental resistance against light, humidity, and the like. Further, it is also possible to coat a phase separation structure or microcapsules further with a matrix material or other microcapsules.

### <Manufacturing method of phase separation structure>

The temperature detecting material of the present embodiment may be manufactured by, for example, the following method. A method of manufacturing a temperature detecting material has: a mixing step of heating a leuco dye, a color developer, a decolorant and a matrix material to a temperature not lower than the melting point of the matrix material and mixing them with one another; and a cooling step of cooling the mixture obtained at the mixing step to a temperature of not higher than the solidifying point of the matrix material. In the cooling step, the matrix material and the temperature indicating material are phase-separated rapidly to form a phase separation structure wherein a phase including the leuco dye, the color developer and the decolorant is dispersed in the matrix material.

When the heating is carried out to a temperature not lower than the melting point of the matrix material to create a liquid state, the compatibility between the temperature indicating material and the matrix material results in a case where the temperature indicating material and the matrix material are compatible with each other (the temperature indicating material is minutely dispersed and visually appears compatible) or a case where they are not compatible (the temperature indicating material and the matrix material are separated into two phases). On this occasion, the case where they are compatible is preferred from the viewpoint of handleability. The temperature indicating material and the matrix material are required to be phase-separated at an operating temperature where the matrix material is in a solid state; however, this is not always required in a heated state where the matrix material is in a liquid state. In order to phase-separate the temperature indicating material and the matrix material at the operating temperature and make them compatible with each other at the heated state, it is better that the polarity of a decolorant, the content of which is particularly large, is within a certain range. If the decolorant has a too small polarity, it becomes compatible with the matrix material at the operating temperature; and if it has a too large polarity, it becomes separated the matrix material in a heated state. Preferably usable is a material having an energy δp of 1 or more and 10 or less given by intermolecular dipole interaction and an energy 5h of 1 or more and 10 or less given by intermolecular hydrogen bond, both of which are estimated by using Hansen solubility parameter as a specific polarity calculation method. However, with respect to a material wherein a decolorant has a large polarity and a temperature indicating material is not compatible with a matrix material even at a heated state, it is allowed to form a phase separation structure by cooling while stirring. Further, a surfactant may be added to achieve compatibility.

When a phase separation structure is formed by cooling to a temperature not higher than the solidifying point of the matrix material, the size of dispersion structure of the temperature indicating material is varied depending on the compatibility between the temperature indicating material and the matrix material. When the decolorant, the contents of which are particularly large, and the matrix material are well compatible to a certain level, a minute dispersion is produced; however, when they are poorly compatible, a large dispersion is produced. The size of a dispersion structure is not particularly limited. However, when it is less than 100 nm, an influence of the interface between the temperature indicating material and the matrix material appears, thus giving an influence on a detection temperature. Further, when the size exceeds 1 mm, each of the temperature indicating material and the matrix material can be visually recognized and the temperature detecting body would cause a significant color irregularity. Thus, the size of the dispersion structure is preferably 100 nm or more and 1 mm or less, particularly, most preferably 100 nm or more and 100 um or less. In order to realize this dispersion structure, preferably usable is a decolorant having an energy δp of 1 or more and 10 or less given by intermolecular dipole interaction and an energy 5h of 1 or more and 10 or less given by intermolecular hydrogen bond, both of which are estimated by using Hansen solubility parameter as a specific polarity calculation method. Further, in the cooling step, the size of the dispersion structure can be reduced by cooling with stirring or adding a surfactant.

### <Thermal marking device>

The temperature detecting material according to the present embodiment can be applied for various thermal marking devices. The thermal marking device is a device that controls a material to have a low viscosity by heating, and discharges and prints the material; and examples thereof include a thermal ink jet printer, a thermal dispenser and a glue gun. The temperature detecting material having a phase separation structure is brought into a low-viscosity liquid state by heating to a temperature not lower than the melting point of the matrix material and the temperature indicating material; and therefore, it can be printed by a thermal marking device without making ink. Further, since the color can be initialized by heating at the time of printing, the temperature control can be conducted by the temperature detecting material immediately after printing. This means that a heating device for initializing the temperature detecting material, separated from a thermal marking device, is not needed, which is useful from the viewpoint of the facility cost. As for the timing of printing by the thermal marking device, it is conceivable that the temperature detecting material is printed, at a control temperature, on a temperature-controlled matter for printing or the temperature detecting material is printed at room temperature, for example, on a matter for printing; and thereafter, the matter for printing is moved to a control temperature area before the temperature detecting material develops a color, and the like.

### <Configuration of temperature indicator>

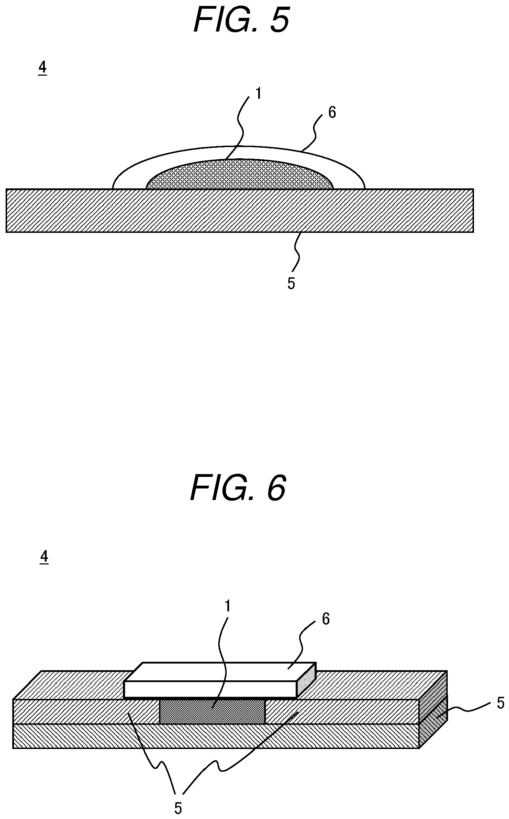

In a temperature indicator according to the present embodiment, the temperature detecting material includes at least a leuco dye, a color developer, a decolorant and a matrix material; the temperature detecting material is in contact with a base material and an adhesive; and at least one of the base material and the adhesive has transparency. FIG. 5 is a schematic view showing the configuration of the temperature indicator. The temperature indicator 4 includes a base material 5, a temperature detecting material 1 and an adhesive 6, and has a structure in which the temperature detecting material 1 is disposed on the base material 5 and covered with the adhesive 6. Since the material for the matrix material of the temperature detecting material 1 is limited, in the case that the adhesive 6 is not provided, the temperature detecting material 1 is easily peeled off from the base material 5 depending on the material of the base material 5. For this reason, the temperature detecting material 1 is usually encapsulated in a solid material thereby to provide a temperature indicator. On the other hand, in the present embodiment, marking of the temperature detecting material is provided on various base materials and the adhesive is applied thereon thereby to prevent the temperature detecting material from being easily peeled off from the base materials; and this makes it possible to manufacture a temperature indicator by a simple process.

In selecting materials for the base material 5 and the adhesive 6, it is necessary to pay attention to the fact that the coloring property of the temperature indicating material in the temperature detecting material 1 is influenced by various materials as described above. This is because the color change of the temperature indicating material occurs with a change of state.

A crystallization phenomenon occurring when the temperature indicating material changes its color from a decolored state to a color-developed state is strongly influenced by the presence of impurities and an interface such as a wall surface of a container. However, in the temperature detecting material of the present embodiment, the temperature indicating material is contained in the matrix material of a non-polar material and therefore, this influence can be eliminated.

The temperature indicating material is liquefied by a melting phenomenon occurring when the temperature indicating material changes its color from a color-developed state to a decolored state. At this time, when the melting point of the matrix material is at a close temperature to the melting point of the temperature indicating material, the matrix material is also liquefied. That is, in a state where the temperature detecting material 1 has fluidity, there is a high possibility that the temperature indicating material of the temperature detecting material 1 comes into contact with the base material 5 or the adhesive 6. At this time, if a material other than a non-polar material is used for the base material 5 or the adhesive 6, the base material 5 or the adhesive 6, and the temperature indicating material may form a solid solution, so that the coloring properties may be deteriorated.

In order to prevent the above, it is desirable that either one of: the temperature detecting material 1; and the base material 5 and the adhesive 6 should be in a solid state in the process of manufacturing a temperature indicator. For example, when the liquefied temperature detecting material 1 is applied onto the solid base material 5, the temperature detecting material 1 forms a phase separation structure and is solidified on the base material 5, so that the coloring property is not deteriorated. Further, even when the liquid adhesive 6 is applied onto the solidified temperature detecting material 1, the temperature indicating material contained in the matrix material and the adhesive 6 are not brought into contact with each other, and therefore, also in this case, the coloring property is not deteriorated.

### (Base material)

In the present embodiment, the material for the base material can be freely selected depending on the required function as long as the material can maintain a solid state when the temperature detecting material is initialized. The initialization temperature of the temperature detecting material is most preferably about 60°C to 150°C and therefore, any base material having heat resistance higher than this temperature range can be applied regardless of the material. For example, an organic material such as paper or plastics, an inorganic material such as ceramics or metals, a composite material of these materials, or the like can be selected freely. The material is selected in conformity with properties required for a temperature indicator, such as high strength, heat resistance, weather resistance, chemical resistance, thermal insulation properties and electrical conductivity. Use of a seal enables close adhesion to an object to be detected (labeling). Further, whether the base material is transparent or not is not particularly restrictive. When the adhesive has transparency, the color change process of the temperature detecting material can be observed from the outside of the adhesive regardless of whether or not the base material has transparency. On the other hand, even in the case that the adhesive does not have transparency, if the base material has transparency, the color change process of the temperature detecting material can be observed from the outside of the base material.

The base material sandwiches the temperature detecting material between itself and the adhesive and therefore, it is preferably larger than an area of marking of the temperature detecting material.

The design or the like of a base material is not limited. It is possible to print information other than the coloring property of the temperature detecting material, or to print a color, and the like, which is effective for inspecting the color of the temperature detecting material.

The base material may form a layered structure of several materials. For example, as shown in FIG. 6, the base material 5 may be formed so as to surround the temperature detecting material 1. This increases the smoothness of the temperature detecting material 1 with respect to the base material 5, so that the color density of the temperature detecting material 1 becomes less uneven.

The base material may be made of an open cell porous material, and the open cell porous material may be impregnated with the temperature detecting material. The impregnation of the open cell porous material with the temperature detecting material can change the processability. The processability depends on the material of the open cell porous material.

The open cell porous material is required to be a material that is not denatured even when it is in contact with the temperature detecting material for a long period. To that end, a material hardly dissolvable in an ordinary organic solvent, such as polyethylene, polypropylene or cellulose is specifically suitable. As an inorganic compound, silicon dioxide is also suitable.

Exemplary structures of an open cell porous material include a sponge, a nonwoven fabric, a woven fabric and others. In the case of cellulose, paper used for preparation of a book or a document may be used. An open cell porous body is formed by holding powder of silicone dioxide, polyethylene or polypropylene with a binder of a similar chemical structure, and it may be used.

### (Adhesive)

In the present embodiment, the material for the adhesive can be freely selected depending on the required function as long as the adhesive is brought into contact with the temperature detecting material in a state where the temperature detecting material is solidified. For example, an adhesive such as a hot melt adhesive having a low melting point and a low viscosity may penetrate into the temperature detecting material when left standing for a long period and possibly affect the coloring property of the temperature indicating material; and therefore, it is not suitable for applications requiring long-term stability. In addition, the adhesive preferably has transparency. When the adhesive has transparency, the color change process of the temperature detecting material can be observed from the outside of the adhesive regardless of whether or not the base material has transparency.

When the adhesive having been heated to a temperature not lower than the melting point of the temperature detecting material is brought into contact with the temperature detecting material, the adhesive may penetrate into the temperature detecting material and the coloring property may be deteriorated. It is therefore necessary to carry out a bonding step in which the temperature detecting material is brought into contact with the liquid adhesive while at least most of the temperature detecting material is in a solidified state.

In the case of a hot melt adhesive, for example, it cannot be applied as an adhesive when it loses the fluidity, that is in a solidified state. Thus, when the solidifying point of the hot melt adhesive is lower than the melting point of the temperature detecting material, this adhesive can be preferably used.

However, the degree of penetration of the adhesive into the temperature detecting material is also related to the viscosity of the adhesive; and as the viscosity of the adhesive is higher, the time for penetration of the adhesive into the temperature detecting material becomes longer. In natural cooling of a bonding step, if the temperature of the adhesive decreases to a temperature not higher than the melting point of the temperature detecting material or a temperature not higher than the solidifying point of the adhesives, the penetration of the adhesive into the temperature detecting material will stop. Thus, even if the temperature in the bonding step is slightly higher than the melting point of the temperature detecting material, the influence is limited to the coloring property of a part of the outermost surface of the temperature detecting material, and the coloring property of most of the temperature detecting material can be maintained. Specifically, it is preferred to use a hot melt adhesive that has a solidifying point not higher than a temperature higher by 50°C than the melting point of the temperature detecting material and has a viscosity near the melting point of 0.1 Pa×s or more and 200 Pa×s or less. It is more preferred to use a hot melt adhesive that has a solidifying point not higher than a temperature higher by 30°C than the melting point of the temperature detecting material and has a viscosity near the melting point of 1 Pa×s or more and 50 Pa×s or lower.

In the case of a temperature indicator using a hot melt adhesive, when an initialization process is performed, the temperature detecting material in a liquefied state comes into contact with the adhesive having a low melting point and a low viscosity, allowing the adhesive and the temperature indicating material to form a solid solution, so that the temperature detection function is deteriorated. That is, when this adhesive is used, the temperature detecting material cannot be re-initialized after the adhesive is applied.

When a solvent-based adhesive is used as the adhesive, the adhesive is brought into contact with the temperature detecting material in a state in which the temperature detecting material is solidified. In the case of this adhesive, it is possible to re-initialize the temperature detecting material after the solvent has volatilized and the adhesive has solidified. However, in the solvent-based adhesive, an organic solvent having a low polarity penetrates into the temperature detecting material and dissolves the temperature indicating material, so that the coloring property is deteriorated. Thus, in order to apply an adhesive to the temperature detecting material, it is necessary to use an adhesive using a high-polarity solvent. Specifically, it is preferred to use an adhesive of water or alcohols such as glycerin, methanol, ethanol, and propanol.

When a solventless reactive adhesive is used as the adhesive, the adhesive may be brought into contact with the temperature detecting material in a state in which the temperature detecting material is solidified, and the adhesive may be cured in that state. Even in the case of this adhesive, the temperature detecting material can be re-initialized after the adhesive is solidified. Examples of the reactive adhesive include a photocurable adhesive such as an acrylic adhesive which is cured by ultraviolet light or visible light, a cross-linking reaction type or thermosetting reaction type adhesive between two kinds of materials of, for example, urethane-based or epoxy-based, and a room temperature setting adhesive of, for example, cyanoacrylate-based or silicone-based which is cured by moisture or the like.

The adhesive can be selected in conformity with the properties required for the temperature indicator, such as high strength, heat resistance, light resistance, chemical resistance, antioxidant property, heat insulating property, electrical conductivity, and resistance to thermal shock due to quenching. An antioxidant, a light stabilizer, or the like which imparts these properties may be added.

An adhesive may be applied or a film may be attached further on an adhesive to form a layer structure of several kinds of materials. For example, a material that deteriorates the transparency upon detection of ultraviolet rays, humidity, oxygen or the like is provided, so that the temperature indicator is allowed to have a function other than the coloring property of the temperature detecting material.

### <Manufacturing process of temperature indicator>

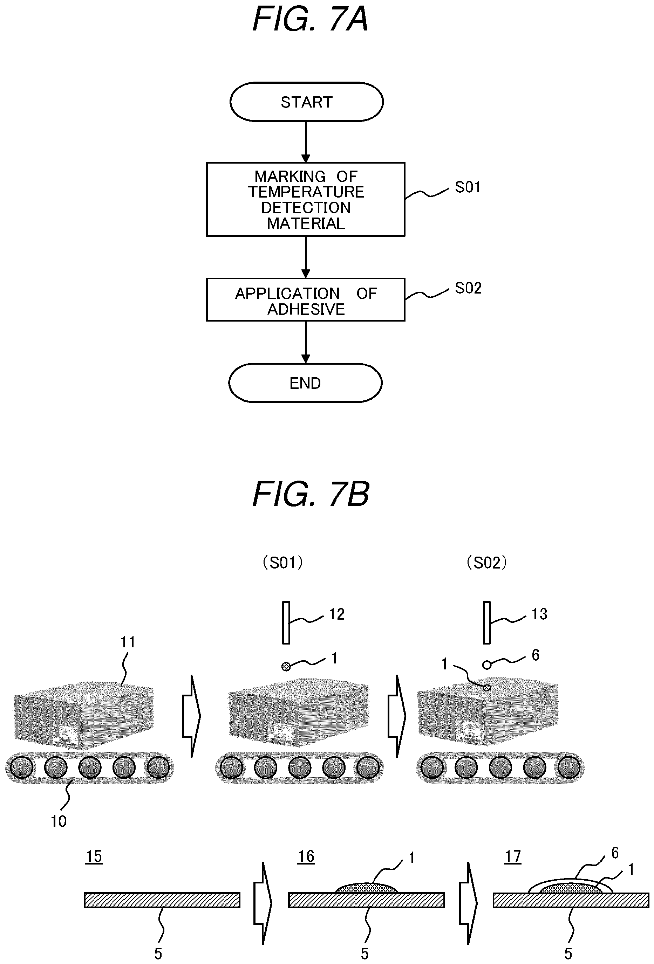

A manufacturing process of a temperature indicator will be described by referring to FIGS. 7A and 7B. FIG. 7A is a manufacturing flowchart of the temperature indicator, and FIG. 7B schematically shows a manufacturing process of the temperature indicator in the temperature indicator manufacturing system. The temperature indicator manufacturing process of FIG. 7B is carried out as a part of a manufacturing process or a distribution process of an object under quality control. FIG. 7B shows an example in which the base material of the temperature indicator is a package 11 of a target product. The package 11 is conveyed by a conveyor (conveying mechanism) 10 to the front of a marking device 12 to mark with the temperature detecting material, and the mark of the temperature detecting material is provided (S01). The state in which the base material 5 (in this example, the package 11 the target product is packed) is marked with the temperature detecting material 1 by the marking device 12 is the state 16 shown in FIG. 7B. The package 11 having the mark of the temperature detecting material thereon is further conveyed by the conveyor 10 to the front of an adhesive application device 13 to apply an adhesive, and the adhesive 6 is applied onto the solidified temperature detecting material 1 (S02). The state in which the adhesive 6 is applied on the temperature detecting material 1 is the state 17 shown in FIG. 7B. The package 11 may be a matter for packaging a target product or a matter to be attached to the target product; and the material therefor is not limited as long as it is not liquefied by heat generated by marking of the temperature detecting material 1. The mark may be provided directly on a target product depending on the target product.

A feature of this process is that initialization of the temperature detecting material can be conducted at the same time as the marking step (S01). In a factory or a distribution warehouse, the temperature detecting material and the adhesive can be managed at normal temperature regardless of the management temperature, and this can reduce the management labor or management cost on temperature indicators. In addition, since the initialization is performed simultaneously with the manufacture of the temperature indicator, the total number of steps for the temperature indicator can be reduced. That is, it is desirable to carry out the manufacturing process of the temperature indicator at a timing of starting individual temperature management of the target product.

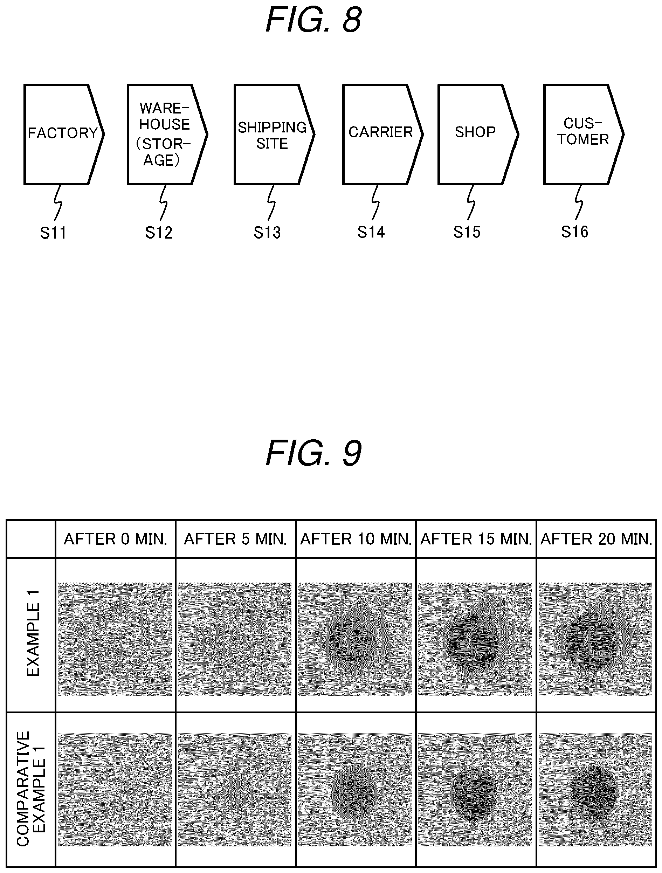

FIG. 8 shows an example of a distribution process in which the temperature of a target product is controlled. The product is transported to a store S15 by a transport vehicle S14 via a factory S11, a storage warehouse S12, and a shipping site S13, reaching a customer S16. For example, a temperature indicator is attached to a product package in a factory S11 and shipped thereby to control the temperature by the temperature indicator in subsequence distribution processes.

Next, the present invention will be described in more detail with reference to Examples and Comparative Examples. The present invention is not limited to these Examples. Example

### (Example 1)

### (Manufacturing of temperature detecting material)

One part by weight of 3,3-bis(p-dimethylaminophenyl)-6-dimethylamino phthalide (CVL manufactured by Yamada Chemical Co., Ltd.) as a leuco dye, 1 part by weigh of octyl gallate manufactured by Tokyo Chemical Industry Co., Ltd. as a color developer, 100 parts by weight of Vitamin K4 manufactured by Tokyo Chemical Industry Co., Ltd. as a decolorant, and 100 parts by weight of Hi-WAX 200P manufactured by Mitsui Chemicals, Inc. as a matrix material were used. Those materials were melted and mixed at 150°C, which was not lower than the melting points of the decolorant and the matrix material, and solidified by natural cooling and thereby, a temperature detecting material having a phase separation structure was manufactured.

### (Application to marking device and manufacturing of temperature indicator)

The produced temperature detecting material was heated at 150°C by a jet dispenser AeroJet manufactured by Musashi Engineering Co., Ltd. to be brought into a liquid state, and was discharged to an object for printing. As the object for printing, general-purpose coated paper was used. Immediately after the temperature detecting material was discharged and solidified, a hot melt adhesive, a glue stick manufactured by EARTHMAN as an adhesive was heated and applied by AC100V glue gun manufactured by EARTHMAN, so that a temperature indicator was produced. The glue stick manufactured by EARTHMAN had a melting point of about 85°C and the temperature detecting material had a melting point of about 120°C. In a bonding step, when the adhesive is heated, discharged and adhered to the temperature detecting material, a surface temperature of the adhesive was measured by a thermography camera FLIR E5-XT and it was about 110°C, and the temperature detecting material was not liquefied.

### (Comparative Example 1)

In Comparative Example 1, the temperature detecting material produced in the same manner as in Example 1 was heated at 150°C by a jet dispenser AeroJet manufactured by Musashi Engineering Co., Ltd. to bring it into a liquid state, and was discharged to coated paper as an object for printing. Thereafter, application of an adhesive was not conducted.

### (Evaluation of coloring property)

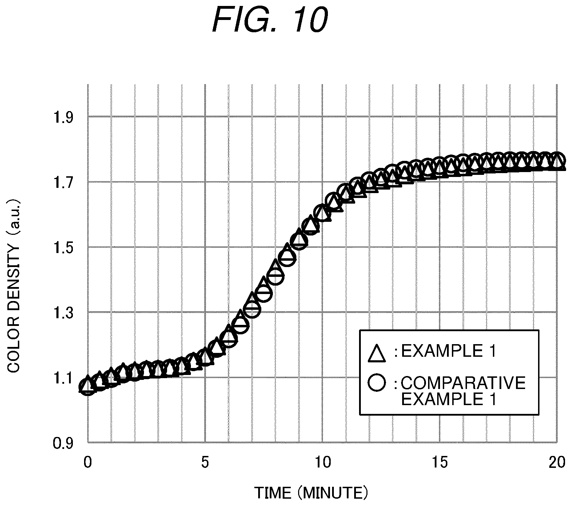

Within 1 minute after manufacturing of the temperature indicator, the object was kept for 5 minutes at 5°C that was assumed as the control temperature of the object and that was not higher than the glass transition point of the decolorant; thereafter, the temperature was increased to 25°C not lower than the glass transition point at a rate of 30°C/min; and changes of the color density of the temperature detecting material in that state was observed with respect to time. Results are shown in FIGS. 9 and 10. From images of FIG. 9 and the color density data of FIG. 10, it was confirmed that the color of the temperature detecting material was developed with time at a temperature of 25°C in both Example 1 and Comparative Example 1. This is because the temperature of 25°C was not lower than the glass transition point of the decolorant, and the temperature indicating material was crystallized.

In Example 1 and Comparative Example 1, no significant change was observed in the manner of increasing the color density; and therefore, it was confirmed that the step of applying an adhesive in Example 1 gave no influence on the coloring property of the temperature detecting material.

### (Evaluation of adhesion to base material)

In order to inspect the adhesiveness of the temperature indicators of Example 1 and Comparative Example 1 to the base material, the resistance to surface scratching was evaluated using a TriboGear surface property tester TYPE: 14FW manufactured by Shinto Scientific Co., Ltd. In the Example, a sliding element was pressed from above the adhesive; and in the Comparative Example, a sliding element was pressed from above the temperature detecting material; and a sliding test were carried out for each of them. The sliding test was carried out using a cardboard piece or a pencil as a sliding element under the conditions of a speed of 1000 mm/min and a number of reciprocations of 10, while a load was changed within the range of 5 to 100 g. In Comparative Example 1, the temperature detecting material peeled off from the coated paper under all of the conditions; while in Example 1, the temperature detecting material and the adhesive were not peeled off from the coated paper under all of the conditions and abrasion of the adhesive was hardly observed.

From the above, it was confirmed that the temperature indicator according to Example 1 can detect a temperature by a change in color due to integration of time and temperature, and has high adhesiveness to a marking object.

### (Comparative Example 2)

The temperature detecting material of Example 1 was discharged onto coated paper as an object for printing in the same manner as in Example 1. Thereafter, TY-863H1, a hot melt adhesive, manufactured by TEXYEAR as an adhesive was heated and applied by a hot bonder manufactured by BOSCH, so that a temperature indicator was produced. TY-863H1 manufactured by TEXYEAR had a melting point of about 145°C and a viscosity of about 3 Pa×s at 200°C. In a bonding step, when the adhesive is heated, discharged and adhered to the temperature detecting material, a surface temperature of the adhesive was measured by a thermography camera FLIR E5-XT, and it was about 175°C, and the temperature detecting material was liquefied. The temperature detecting material of this temperature indicator remained decolored even at a temperature of 25°C; and it was not confirmed that the color was developed with time.

### (Example 2)

A temperature detecting material produced in the same manner as in Example was discharged onto coated paper as an object for printing by the same method as in Example. Thereafter, a hot melt adhesive, MORESCO-MELT (registered trademark) TN-286Z manufactured by MORESCO as an adhesive was heated and applied at 150°C by a jet dispenser AeroJet manufactured by Musashi Engineering Co., Ltd., so that a temperature indicator was produced. MORESCO-MELT TN-286Z manufactured by MORESCO had a melting point of about 97°C and a viscosity at 140°C of about 12 Pa×s. In a bonding step, when the adhesive was heated and discharged, and adhered to the temperature detecting material, a surface temperature of the adhesive was measured by a thermography camera FLIR E5-XT, and it was about 130°C. This temperature was higher than about 120°C, which was the melting point of the temperature detecting material of Example 1; however, the adhesive had a high viscosity and was solidified before the temperature detecting material was liquefied. It was confirmed that the temperature detecting material of this temperature indicator developed color with time at a temperature of 25°C.

### Reference Signs List

1: Temperature detecting material
2: Temperature indicating material
3: Matrix material
4: Temperature indicator
5: Base material
6: Adhesive
10: Conveyer
11: Package
12: Marking device
13: Adhesive application device
15, 16, 17: State

## Claims

1. A temperature indicator manufacturing system comprising:
a marking device that marks a base material with a temperature detecting material containing a matrix material and a temperature indicating material including at least a leuco dye, a color developer, and a decolorant; and
an adhesive application device that applies an adhesive onto the temperature detecting material provided as marking on the base material,
wherein the adhesive is applied in a state where the temperature detecting material provided as the marking on the base material is solidified, and solidified before the temperature detecting material provided as the marking on the base material is liquefied.

2. The temperature indicator manufacturing system according to claim 1, wherein:
the base material is a package holding a target product, temperature control of which is conducted by a temperature indicator using the temperature detecting material; and
the package is conveyed by a conveyance mechanism from the marking device to the adhesive application device.

3. The temperature indicator manufacturing system according to claim 1, wherein:
the matrix material is a nonpolar material; and
the temperature detecting material has a phase separation structure in which the temperature indicating material is dispersed in the matrix material.

4. The temperature indicator manufacturing system according to claim 1, wherein the adhesive is any one of a hot melt adhesive, a water-based adhesive, an alcohol-based adhesive, and a reactive adhesive.

5. The temperature indicator manufacturing system according to claim 4, wherein a solidifying point of the hot melt adhesive is not higher than a temperature higher by 50°C than a melting point of the temperature detecting material and a viscosity thereof near the melting point is 0.1 Pa×s or more and 200 Pa×s or lower.

6. The temperature indicator manufacturing system according to claim 1, wherein at least one of an antioxidant and a light stabilizer is added to the adhesive.

7. The temperature indicator manufacturing system according to claim 1, wherein:
the marking device is a marking device that heats the temperature detecting material and provides the marking on the base material; and
the adhesive application device is an adhesive application device that heats and applies the adhesive on the temperature detecting material provided as the marking on the base material.

8. A method for manufacturing a temperature indicator comprising:
marking, by a marking device, a base material with a temperature detecting material containing a matrix material and a temperature indicating material including at least a leuco dye, a color developer, and a decolorant; and
applying an adhesive on the temperature detecting material provided as marking on the base material by an adhesive application device,
wherein the adhesive is applied in a state where the temperature detecting material provided as the marking on the base material is solidified, and solidified before the temperature detecting material provided as the marking on the base material is liquefied.

9. The method for manufacturing a temperature indicator according to claim 8, wherein:
the base material is a package holding a target product, temperature control of which is conducted by a temperature indicator using the temperature detecting material; and
the package is conveyed by a conveyance mechanism from the marking device to the adhesive application device.

10. The method for manufacturing a temperature indicator according to claim 8, wherein:
the matrix material is a nonpolar material; and
the temperature detecting material has a phase separation structure in which the temperature indicating material is dispersed in the matrix material.

11. The method for manufacturing a temperature indicator according to claim 8, wherein the adhesive is any one of a hot melt adhesive, a water-based adhesive, an alcohol-based adhesive, and a reactive adhesive.

12. The method for manufacturing a temperature indicator according to claim 11, wherein a solidifying point of the hot melt adhesive is not higher than a temperature higher by 50°C than a melting point of the temperature detecting material and a viscosity thereof near the melting point is 0.1 Pa×s or more and 200 Pa×s or lower.

13. The method for manufacturing a temperature indicator according to claim 8, wherein at least one of an antioxidant and a light stabilizer is added to the adhesive.

14. The method for manufacturing a temperature indicator according to claim 8, wherein:
the marking device is a marking device that heats the temperature detecting material and provides the marking on the base material; and
the adhesive application device is an adhesive application device that heats and applies the adhesive on the temperature detecting material provided as the marking on the base material.
